# EUROPEAN PATENT SPECIFICATION

(11) **EP 4 245 575 B1**
(45) Date of publication and mention of the grant of the patent: **20.08.2025**
(21) Application number: 21948476.3
(22) Date of filing: 28.10.2021
(51) Int. Cl.: B60C 19/00, G06K 19/077, H01Q 1/22, H01Q 1/24, H01Q 1/38, H01Q 21/28, B60C 13/00

(54) **PNEUMATIC TIRE**
LUFTREIFEN
PNEUMATIQUE

(30) Priority: 30.06.2021 JP 2021109744
(43) Date of publication of application: 20.09.2023
(73) Proprietor: BRIDGESTONE CORPORATION, Chuo-ku Tokyo 104-8340 (JP)
(72) Inventor: OSAKA, Takashi, Tokyo 104-8340 (JP)
(74) Representative: Marks & Clerk LLP
(86) International application number: PCT/JP2021/039893
(87) International publication number: WO 2023/276173

(56) References cited:
- EP-A1- 1 552 968
- EP-A1- 3 632 711
- EP-A2- 1 598 220
- WO-A1-2021/014278
- JP-A- 2005 216 077
- JP-A- 2005 335 384
- JP-A- 2015 223 918
- JP-A- 2017 132 292
- JP-A- 2020 185 975
- JP-A- 2021 037 907
- JP-A- 2021 046 057

## Description

### TECHNICAL FIELD

This invention relates to a pneumatic tire.

### BACKGROUND

There has been conventionally known a pneumatic tire including a communication device such as a Radio Frequency (RF) tag having a memory or the like to read and write data of manufacturing management, delivery management, usage history management, etc. of the tire (for example, see PTL 1).

EP1598220A2 discloses a patch having integrated electronics and positioned within the structure of a tire is provided. A process for integrating such patch within a tire is also provided. The patch is placed within the tire structure as opposed to resting on a tire surface. The patch may be attached within the tire structure using adhesives or may be bonded within the tire structure through a curing process.

EP1552968A1 discloses a pneumatic tire having a film-shaped electronic device on a surface of the tire or inside the tire. The film-shaped electronic device is slidable between sheet-shaped members disposed on both surfaces of the film-shaped electronic device.

EP3632711A1 discloses a tire which can maintain the performance of an electronic component by arranging the electronic component at a position distanced from metal components. A tire includes tread having at least one ring-shaped steel belt extending in a circumferential direction of the tire, and a pair of beads having bead filler extending to an outer side of a tire-radial direction of the bead core, in which an RFID tag serving as an electronic component is embedded in a region between a tire-radial direction outside end of the bead filler and a tire-width direction outside end of the steel belt.

WO2021014278A1 discloses a method of manufacturing an electronic device to be applied to rubber article. The device comprises an electronic element, two layers of thermoplastic material which are arranged in a sandwich-like manner so as to contain, between one another, the electronic element, and at least an outer rubber layer arranged to cover an outer surface of at least one of the respective thermoplastic layers. The method comprises a preliminary step comprising (a) a deposition operation, during which an adhesive solution consisting of a basic water solution comprising a latex of an elastomer rubber and a combination of resorcinol and formaldehyde is applied on at least one outer surface of one of the layers of thermoplastic material; and (b) a heating operation, during which the layers of thermoplastic material on which the adhesive solution was applied are kept at a temperature ranging from 120 to 230°C for an amount of time ranging from 2 to 15 min.

### CITATION LIST

### Patent Literature

PTL 1: JP2017531825A

### SUMMARY

### (Technical Problem)

Communication performance of the communication device as described above might be inhibited by a tire rubber. In particular, when the tire rubber contains a high amount of carbon black, the communication performance is likely to be inhibited. Waterproof measures are also important for the communication device because it has electronic components such as an IC chip.

It could be helpful to provide a pneumatic tire including a communication device with inhibition of communication performance reduced and waterproof measures applied.

### (Solution to Problem)

According to a first aspect of the invention, there is provided a pneumatic tire as specified in claim 1.

### (Advantageous Effect)

This invention can provide a pneumatic tire including a communication device with inhibition of communication performance reduced and waterproof measures applied.

### BRIEF DESCRIPTION OF THE DRAWINGS

In the accompanying drawings:
FIG. 1 is a schematic tire width direction cross-sectional view of a pneumatic tire according to one of the disclosed embodiments;
FIG. 2 is a schematic view of a communication device, not according to present invention, but is useful for understanding the present invention, wrapped with a coating material in the embodiment of FIG. 1; and
FIG. 3 is a schematic view of a communication device doubly wrapped with a coating material, according to the invention.

### DETAILED DESCRIPTION

Hereinafter, embodiments of the present invention will be illustratively described in detail with reference to the drawings.

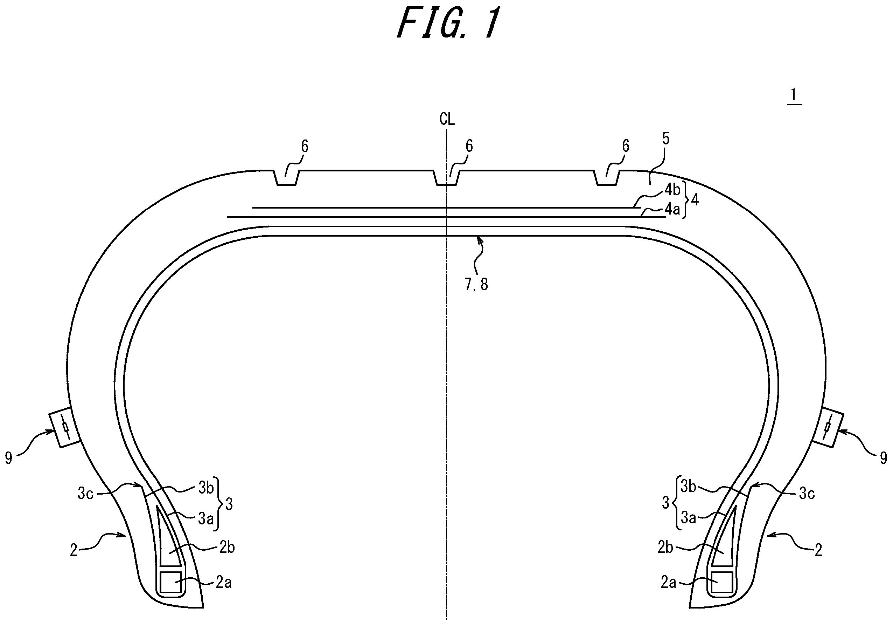

FIG. 1 is a tire width direction cross-sectional view of a pneumatic tire according to one of the disclosed embodiments. As illustrated in FIG. 1, this tire 1 includes: a pair of bead portions 2; a carcass 3 toroidally extending between the pair of bead portions 2; a belt 4 formed by one or more belt layers disposed outward in the tire radial direction of a crown portion of the carcass 3; and a tread 5 disposed outward in the tire radial direction of the belt 4.

In the illustrated example, a bead core 2a is embedded in the bead portion 2, and a bead filler 2b having a substantially triangular cross section is disposed outward in the tire radial direction of the bead core 2a.

In the illustrated example, the carcass 3 is composed of one or more carcass plies. The carcass 3 includes a carcass main body 3a toroidally extending between the pair of bead portions 2, and a carcass turn-up portion 3b that continues from the carcass main body 3a and turns up around the bead core 2a. In the illustrated example, the end of the carcass turn-up portion 3b terminates outward in the tire radial direction with respect to the outward end in the tire radial direction of the bead filler 2b, but the position of the end of the carcass turn-up portion 3b is not limited to this. The cord of the carcass ply is not particularly limited but may be an organic fiber cord.

In the illustrated example, the belt 4 includes two belt layers 4a and 4b and is an inclined belt in which belt cords extend so as to intersect one another between the layers. The angle with respect to the tire circumferential direction of belt cord is not particularly limited but may be, for example, 15° to 60°. The number of layers of the belt layer is not particularly limited so long as there are one or more layers. The material of the belt cord is not particularly limited, and a steel cord may be used.

In the illustrated example, the tread 5 is formed of a single-layer tread rubber but may be formed as a tread having a multi-layer rubber in the tire radial direction or the tire width direction. In the illustrated example, three circumferential main grooves 6 are provided on the tread 5, but the number of the circumferential main grooves, the groove width, the groove depth, the groove shape, etc. are not particularly limited.

In the illustrated example, an inner liner 8 is disposed on a tire inner surface 7. This can prevent the permeation of air and gas.

As illustrated in FIG. 1, this tire 1 includes communication devices 9 one by one at each tire width direction half bounded by a tire equatorial plane CL. The tire 1 may include one or more communication devices 9.

The communication device 9 performs wireless communication. In the illustrated example, the communication device 9 is an RF tag having: one or more (two in the illustrated example) antennas 11 that transmit and/or receive an electromagnetic wave; and an IC chip 10 that has a storage.

In this example, the IC chip 10 has any known memory, the storage and any known processor, a controller. The antenna 11 is connected to the IC chip 10 and extends linearly, wavily, or helicoidally. In this example, two antennas 11 are extending in opposite directions one another. The IC chip 10 may be operated by a dielectric electromotive force generated by the electromagnetic wave received by the one or more antennas 11. That is, the communication device 9 may be a passive communication device. Alternatively, the communication device 9 may further include a battery to allow communication by generating an electromagnetic wave with its own electric power. That is, the communication device 9 may be an active communication device. The communication device 9 can read data of manufacturing management, delivery management, usage history management, etc. of the tire, which has been stored in the storage, or write such data in the storage.

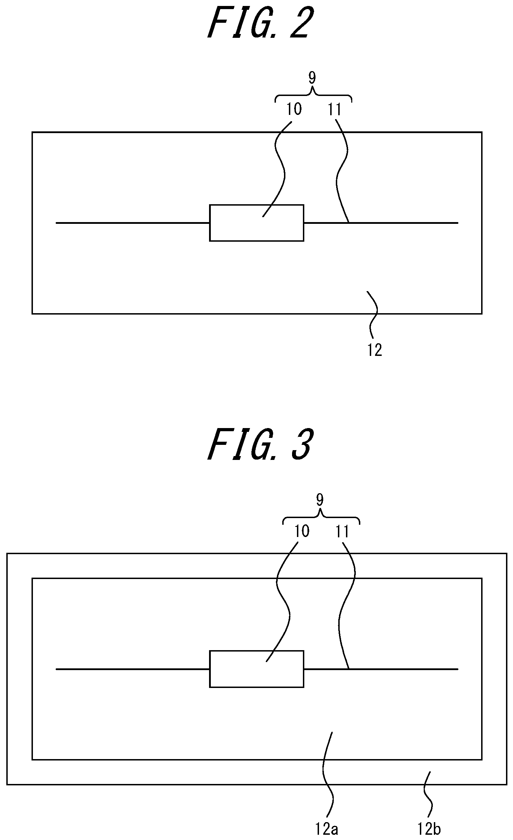

FIG. 2 is a schematic view of the communication device not according to present invention, but useful for understanding the present invention. The communication device 9 is entirely wrapped with a coating material 12. That is, the coating material 12 prevents the communication device 9 from being exposed to rain or the like. The coating material 12 is formed of vinyl or nylon. In the illustrated example, the coating material 12 has one layer.

As illustrated in FIG. 1, the communication device 9 wrapped with the coating material 12 is disposed on a sidewall portion of the tire in this embodiment. In this embodiment, the communication device 9 wrapped with the coating material 12 is attached to the surface of the sidewall portion of the tire 1. In this example, the communication device 9 wrapped with the coating material 12 is attached to the surface of the sidewall portion via an adhesion layer (not illustrated). Any known adhesive can be used for the adhesion layer.

As another example, the communication device 9 wrapped with the coating material 12 may be embedded in the sidewall portion.

In this example, the communication device 9 is positioned outward in the tire radial direction with respect to the end of the carcass turn-up portion 3b but is positioned inward in the tire radial direction with respect to a tire maximum width portion (part where the tire width in the tire width direction is maximum in a cross sectional view of FIG. 1). This can cause the carcass to reduce inhibition of transmitting and receiving of the electromagnetic wave and can increase durability of the communication device by avoiding a part near a buttress portion where deformation is large. On the other hand, the disposition of the communication device 9 is not limited to this example. The communication device 9 may be positioned inward in the tire radial direction with respect to the end of the carcass turn-up portion 3b. The communication device 9 may be positioned outward in the tire radial direction with respect to the tire maximum width portion.

Hereinafter, operations and effects of the pneumatic tire of the present invention will be described.

In the pneumatic tire of this embodiment of the invention, the communication device 9 is entirely wrapped with the coating material 12 formed of vinyl and nylon. Vinyl and nylon do not prevent the electromagnetic wave compared with a rubber containing carbon black and thus can reduce inhibition of the communication performance of the communication device 9. Vinyl and nylon have waterproof property and water repellency. Thus, the communication device 9 entirely wrapped with such coating material has high waterproof property.

In this way, the pneumatic tire of this embodiment can include a communication device with inhibition of communication performance reduced and waterproof measures applied.

Furthermore, vinyl and nylon have stretchability and thus can follow the deformation of the tire and are materials having high durability.

The communication device wrapped with the coating material is preferably attached to the surface of the sidewall portion via an adhesion layer.

As illustrated in FIG. 3, the communication device 9 is doubly wrapped with two types of coating materials 12a and 12b. This is because the waterproof property can be ensured even if the coating material (for example, of the surface layer) is ruptured. Vinyl is used for the inner layer 12a and nylon is used for the outer layer 12b.

Although no specific limitations are placed on the pneumatic tire of this invention, the pneumatic tire of this invention is particularly suitable for a passenger vehicle tire or a tire for truck and bus.

### REFERENCE SIGNS LIST

- 1: tire
- 2: bead portion
- 3: carcass
- 4: belt
- 5: tread
- 6: circumferential main groove
- 7: tire inner surface
- 8: inner liner
- 9: communication device
- 10: IC chip
- 11: antenna
- 12: coating material

## Claims

1. A pneumatic tire (1) comprising a communication device (9), wherein
the communication device is entirely wrapped with a coating material (12),
the coating material (12) is formed of vinyl and nylon, and
the communication device wrapped with the coating material is attached to a surface of a sidewall portion of the pneumatic tire or embedded in the sidewall portion, **characterised in that**:
the communication device is doubly wrapped with coating materials, vinyl is used as an inner layer (12a), and nylon is used as an outer layer (12b).

2. The pneumatic tire (1) according to claim 1, wherein the communication device (9) wrapped with the coating material (12) is attached to the surface of the sidewall portion via an adhesion layer.

3. The pneumatic tire (1) according to claims 1 or 2, wherein the communication device (9) is an RF tag having: one or more antennas (11) that transmit and/or receive an electromagnetic wave; and an IC chip (10) that has a storage.

## Patentansprüche

1. Luftreifen (1), umfassend eine Kommunikationsvorrichtung (9), wobei
die Kommunikationsvorrichtung vollständig mit einem Beschichtungsmaterial (12) umhüllt ist,
das Beschichtungsmaterial (12) aus Vinyl und Nylon ausgebildet ist, und
die Kommunikationsvorrichtung, die mit dem Beschichtungsmaterial umhüllt ist, an einer Oberfläche eines Seitenwandabschnitts des Luftreifens befestigt oder in dem Seitenwandabschnitt eingebettet ist, **dadurch gekennzeichnet, dass**:
die Kommunikationsvorrichtung doppelt mit Beschichtungsmaterialien umhüllt ist, Vinyl als eine Innenschicht (12a) verwendet wird, und Nylon als eine Außenschicht (12b) verwendet wird.

2. Luftreifen (1) nach Anspruch 1, wobei die Kommunikationsvorrichtung (9), die mit dem Beschichtungsmaterial (12) umhüllt ist, an der Oberfläche des Seitenwandabschnitts über eine Haftschicht befestigt ist.

3. Luftreifen (1) nach Ansprüchen 1 oder 2, wobei die Kommunikationsvorrichtung (9) ein RF-Etikett ist, das Folgendes aufweist: eine oder mehrere Antennen (11), die eine elektromagnetische Welle übertragen und/oder empfangen; und einen IC-Chip (10), der einen Speicher aufweist.

## Revendications

1. Bandage pneumatique (1) comprenant un dispositif de communication (9), dans lequel
le dispositif de communication est entièrement enveloppé d'un matériau de revêtement (12),
le matériau de revêtement (12) est formé de vinyle et de nylon, et
le dispositif de communication enveloppé du matériau de revêtement est fixé à une surface d'une partie de flanc du bandage pneumatique ou incorporé dans la partie de flanc, **caractérisé en ce que** :
le dispositif de communication est doublement enveloppé de matériaux de revêtement, le vinyle est utilisé comme couche interne (12a) et le nylon est utilisé comme couche externe (12b).

2. Bandage pneumatique (1) selon la revendication 1, dans lequel le dispositif de communication (9) enveloppé du matériau de revêtement (12) est fixé à la surface de la partie de flanc par l'intermédiaire d'une couche d'adhésion.

3. Bandage pneumatique (1) selon la revendication 1 ou la revendication 2, dans lequel le dispositif de communication (9) est une étiquette RF comportant : une ou plusieurs antennes (11) qui émettent et/ou reçoivent une onde électromagnétique ; et une puce IC (10) qui comporte une mémoire.
